# EUROPÄISCHE PATENTSCHRIFT

(11) **EP 0 587 930 B1**
(45) Veröffentlichungstag und Bekanntmachung des Hinweises auf die Patenterteilung: **04.02.2004**
(21) Anmeldenummer: 92115840.8
(22) Anmeldetag: 16.09.1992
(51) Int. Cl.: H04L 12/56, H04Q 11/00

(54) **Verfahren zur Durchschaltung von optischen Nachrichtenzellen**
Method for switching optical communication cells
Procédé de commutation pour des cellules de communication optiques

(43) Veröffentlichungstag der Anmeldung: 23.03.1994
(73) Patentinhaber: SIEMENS AKTIENGESELLSCHAFT, 80333 München (DE)
(72) Erfinder: Stein, Karl-Ulrich, Dr., W-8025 Unterhaching (DE)

(56) Entgegenhaltungen:
- WO-A-91/04642
- PATENT ABSTRACTS OF JAPAN vol. 014, no. 012 (E-871)11. Januar 1989
- ELECTRONICS LETTERS Bd. 26, Nr. 22, 25. Oktober 1990, UK Seiten 1895 - 1897 , XP171258 M. TSUKADA ET AL
- IEEE GLOBECOM 87 Bd. 3, November 1987, JP Seiten 1861 - 1865 , XP12418 K. ENG
- PATENT ABSTRACTS OF JAPAN vol. 009, no. 178 (E-330)23. Juli 1985
- PATENT ABSTRACTS OF JAPAN vol. 007, no. 099 (E-172)27. April 1983

## Beschreibung

In neueren Enwicklungen der Fernmeldetechnik - und hier in der Entwicklung diensteintegrierender Breitbandnetze (B-ISDN) - spielt der auf asynchroner Zeitmultiplextechnik basierende Asynchrone Transfer-Modus (ATM) eine wesentliche Rolle, dem zu folge die Signalübertragung in einem Bitstrom vor sich geht, der in - jeweils aus Kopf und Nutzinformationsteil bestehende - Zellen konstanter Länge von z.B. 53 Oktetts unterteilt ist, die je nach Bedarf mit paketierten Nachrichten belegt werden; ist gerade keine Nutzinformation zu übermitteln, so werden spezielle Leerzellen übertragen. In ATM-Vermittlungsstellen werden virtuelle Verbindungen aufgebaut, d.h. Verbindungen, die nur dann einen Wegeabschnitt tatsächlich benutzen, wenn über diesen tatsächlich ein Nachrichtenpaket (Block) zu übermitteln ist, wobei jedes Paket in seinem Kopf u.a. eine z.B. 2 Oktetts umfassende Adresse zur eindeutigen Zuordnung des Pakets zu einer bestimmten virtuellen Verbindung enthält. Dabei kann jedes Paket am Eingang zur Koppelanordnung nach Maßgabe der jeweiligen Wahlinformation die komplette Information für seinen Weg durch die Koppelanordnung erhalten; mit Hilfe dieser Information schalten die Koppelelemente dann das Paket auf dem festgelegten Weg selbst durch (self-routing network) (siehe z.B. telcom report 11 (1988) 6, 210 ... 213).

Koppelanordnungen für ATM-Nachrichtenzellen lassen sich auch - wenn man auf eine Header Translation verzichtet oder sie in elektronischen Einrichtungen durchführt - mit optisch transparenten Einrichtungen für Queueing- und Routing-Funktionen realisieren.

So ist beispielsweise (aus EP-A2-0 313 389) ein optisches Paketvermittlungssystem mit in Koppelstufen angeordneten optischen 2x2-Koppelschaltern bekannt, bei dem jeder Koppelschalter an seinen zwei Eingängen Pufferspeichereinrichtungen aufweist, die zu dem Eingang eines optischen Umschalters führen, dessen beide Ausgänge die beiden Koppelschalterausgänge bilden, wobei dem optischen Umschalter im Lichtwellenleiterpfad ein optischer Demultiplexer vorgeschaltet ist, durch den aus einem Routing Header nur Licht einer koppelstufenindividuell festgelegten Wellenlänge auskoppelbar ist; von diesem Demultiplexer her wird über einen optoelektrischen Wandler der im Lichtwellenleiterpfad nachfolgende optische Umschalter gesteuert, wobei je nachdem, ob im Routing Header Licht der für die betreffende Koppelstufe festgelegten Wellenlänge enthalten ist oder nicht, der optische Umschalter in seinen einen oder in seinen anderen Schaltzustand gelangt.

Zur Vermeidung von Zellenverlusten ist es dabei bekannt, Zellenspeicher vorzusehen, die aus einer rückgekoppelten Leitung des Koppelfeldes mit einer Verzögerung von mindestens einer Zellendauer bestehen.
Damit werden bei diesem bekannten Lichtwellenleiter-Telekommunikationssystem sowohl Routing-Funktionen als auch damit verbundene Queueing-Funktionen zur Vermeidung von Zellenverlusten optisch durchgeführt, letztere allerdings beschränkt auf die Einfädelung von Nachrichtenpaketen zweier Eingangsleitungen auf eine gemeinsame weiterführende Leitung.

Das gleiche Queueing-Prinzip kann auch bei einer Koppelmatrix Anwendung finden, bei der Koppelmatrixausgänge über LWL-Verzögerungsleitungen mit abgestuften Laufzeiten gleich der Nachrichtenzellendauer bzw. einem Mehrfachen davon mit Koppelmatrixeingängen verbunden sind.

So ist z.B. eine ein- oder mehrstufige ATM-Koppelanordnung bekannt, in der jeweils zwei aufeinanderfolgende optische Raumkoppelvielfache sowohl über Lichtwellenleiter vernachlässigbar kleiner Laufzeit als auch über optische Zwischenspeicher miteinander verbunden sind, so daß Nachrichtenzellen über die optische Koppelanordnung je nach Bedarf unverzögert oder mit unterschiedlichen Verzögerungen durchgeschaltet werden können. Die optische Zwischenspeicherung geschieht dabei in einer mit einer Mehrzahl von Lichtwellenleiter abgestufter Laufzeiten gebildeten optischen Laufzeitharfe, deren Laufzeiten gleich ganzzahligen n-fachen der Nachrichtenzellendauer sind, um Zellenverluste bei belegten Koppelanordnungsausgängen zu vermeiden (EP-92108243.4); zusätzlich oder auch alternativ kann in einer optischen Koppeleinrichtung, in der ein Teil der Ausgänge eines optischen Raumkoppelvielfachs über eine, mit einer Mehrzahl von Lichtwellenleitern abgestufter Laufzeiten gebildete optische Laufzeitharfe mit einer entsprechenden Anzahl von Eingängen des Raumkoppelvielfachs verbunden ist, so daß Nachrichtenzellen über die optische Koppelanordnung je nach Bedarf praktisch unverzögert oder mit unterschiedlichen Verzögerungen durchgeschaltet werden können, die Laufzeitharfe zur Reduzierung eines mehr oder weniger großen Jitters von unsynchronisiert auftretenden Nachrichtenzellen Lichtwellenleiter abgestufter Laufzeiten aufweisen, die kleiner als die Dauer einer Nachrichtenzelle sind (DE-A1-4 216 077).

Eine elementare Funktionseinheit für Koppeleinrichtungen mit Routing- und Queuing-Funktionen ist ein Konzentrator, der statistisch - synchron oder asynchron - auf einer Vielzahl von Eingangsleitungen eintreffende Nachrichtenzellen nacheinander auf einer Ausgangsleitung auftreten läßt, und die Erfindung zeigt nun einen Weg zu einer zweckmäßigen Realisierung einer solchen Konzentratorfunktion mit optotechnischen Mitteln.
Die Erfindung betrifft ein Verfahren zum Durchschalten von optischen Nachrichtenzellen über eine optische Koppeleinrichtung mit wenigstens einem Ein- und Ausgänge aufweisenden, optischen Raumkoppelvielfach, wobei zumindest ein Teil der Ausgänge des Raumkoppelvielfachs jeweils mit Eingängen einer optischen Laufzeitharfe verbunden ist, bei dem die Ausgangssignale der optischen Laufzeitharfe zu einem Signal zusammengefaßt werden und die Lichtwellenleiter der optischen Laufzeitharfe jeweils eine unterschiedliche Laufzeit aufweisen, wobei die Laufzeit ein ganzzahliges Vielfaches der Nachrichtenzellendauer ist. Dabei werden nach Maßgabe des Eintreffens von Nachrichtenzellen an den Eingängen des Raumkoppelvielfachs die optischen Nachrichtenzellen im Raumkoppelvielfach zur nachfolgenden optischen Laufzeitharfe in der Weise durchgeschaltet, daß sukzessive eintreffende Nachrichtenzellen einen aktuell bestimmten Lichtwellenleiter der optischen Laufzeitharfe durchlaufen, daß bei gleichzeitigem Eintreffen von m Nachrichtenzellen, ausgehend von dem Lichtwellenleiter mit der größten zuvor in Anspruch genommenen Laufzeit, diese Nachrichtenzellen jeweils einen anderen von den n Lichtwellenleitern der Laufzeitharfe mit Laufzeiten der jeweils größten gerade zuvor in Anspruch genommenen Laufzeit und den m-1 in der Laufzeitstufung nächstgrößeren Laufzeitdauern durchlaufen und daß bei jedem Nichteintreffen von Nachrichtenzellen an Stelle des Lichtwellenleiters mit der jeweils größten gerade zuvor in Anspruch genommenen Laufzeit der Lichtwellenleiter mit der um eine Nachrichtenzellendauer kürzeren Laufzeit zum nunmehr aktuellen Lichtwellenleiter mit der größten gerade in Anspruch genommenen Laufzeit bestimmt wird. Weiterhin durchlaufen sukzessive eintreffende Nachrichtenzellen bis zu einem erstmaligen gleichzeitigen Eintreffen einer Mehrzahl von Nachrichtenzellen den Lichtwellenleiter mit einer Laufzeit gleich dem 0-fachen der Nachrichtenzellendauer.

Die Erfindung bringt den Vorteil mit sich, eine beispielsweise auch bei Bitraten im Bereich von mehr als 1 Gbit/s vorteilhaft einzusetzende optische Koppeleinrichtung relativ einfach realisieren und mit übersichtlichen Steueralgorithmen betreiben zu können.

Es sei an dieser Stelle bemerkt, daß (aus den Patent Abstracts of Japan zu JP-A-1256846) bekannt ist, zur Realisierung einer Konzentratorfunktion eine optische Koppeleinrichtung zur Durchschaltung von optischen Nachrichtenzellen mit einem eingangseitig mit den Eingängen der optischen Koppeleinrichtung verbundenen optischen Raumkoppelvielfach sowie mit einer Gruppe von acht Lichtwellenleitern untereinander gleicher Laufzeit und einer Kaskade von sieben Multiplexern vorzusehen; beginnend mit dem ersten Multiplexer, dessen beiden Eingänge jeweils über einen der genannten Lichtwellenleiter mit den beiden ersten Ausgängen des Raumkoppelvielfachs verbunden sind, führt dabei der Ausgang des jeweiligen Multiplexers zu dem jeweils einen Eingang des in der Reihe jeweils nachfolgenden Multiplexers, dessen jeweils zweiter Eingang über einen der genannten Lichtwellenleiter mit dem jeweils nächsten Ausgang des Raumkoppelvielfachs verbunden ist, wobei schließlich der Ausgang des letzten Multiplexers der Kaskade von Multiplexern direkt zu dem Ausgang der Konzentratoreinrichtung führt. Diese bekannte Einrichtung benötigt in einem mit einer Kaskade von Multiplexern getaperten Schaltungsteil eine entsprechende Mehrzahl von Multiplexern, während bei der eine optische Laufzeitharfe mit Lichtwellenleitern abgestufter Laufzeiten verwendenden Erfindung nur einmal die Ausgänge der Laufzeitharfe zu einem Ausgang der optischen Koppeleinrichtung zusammengeführt werden, was demgegenüber merklich einfacher zu realisieren ist.

Die Erfindung kann dahingehend weiter ausgestaltet sein, daß ein Teil der Ausgänge des Raumkoppelvielfachs eine Gruppe bildet und dieser eine optische Laufzeitharfe zugeordnet ist und daß bei mehreren Gruppen von Ausgangssignalen mehrere optische Laufzeitharfen vorgesehen sind.

In weiterer Ausgestaltung der Erfindung wird zumindest ein Ausgangssignal zumindest einer optischen Laufzeitharfe als zumindest ein Eingangssignal des Raumkoppelvielfachs erneut zugeführt, wobei bei dieser rekursiven Realisierung die optische Laufzeitharfe auch Lichtwellenleiter mit den für einen zweiten Durchlauf erforderlichen Laufzeiten aufweist.

Nach einer weiteren Ausgestaltung des erfindungsgemäßen Verfahrens werden bei mehreren optischen Laufzeitharfen deren Ausgangssignale über ein weiteres Raumkoppelvielfach an zumindest eine weitere optische Laufzeitharfe geführt, wobei die Ausgangssignale der weiteren optischen Laufzeitharfe zu einem Signal zusammengefaßt werden.

Weitere Besonderheiten der Erfindung werden aus der nachfolgenden Beschreibung und den Zeichnungen ersichtlich.

Dabei zeigen
- Fig. 1: schematisch eine einstufige optische Konzentrator einrichtung mit einer Laufzeitharfe und
- Fig. 2: eine solche Konzentratoreinrichtung mit mehreren Laufzeitharfen;
- Fig. 3: zeigt schematisch die Durchschaltung von Nachrichtenzellen zu den einzelnen Lichtwellenleitern einer Laufzeitharfe. Des weiteren zeigt
- Fig. 4: schematisch ein vorteilhaftes Ausführungsbeispiel einer zweistufigen Konzentratoreinrichtung;
- Fig. 5: zeigt ein weiteres Ausführungsbeispiel einer zweistufigen optischen Konkentratoreinrichtung, und in
- Fig. 6: ist ein zweckmäßiges Ausführungsbeispiel einer mit einer Mehrzahl von optischen Konzentratoren gebildeten größeren Koppeleinrichtung skizziert.

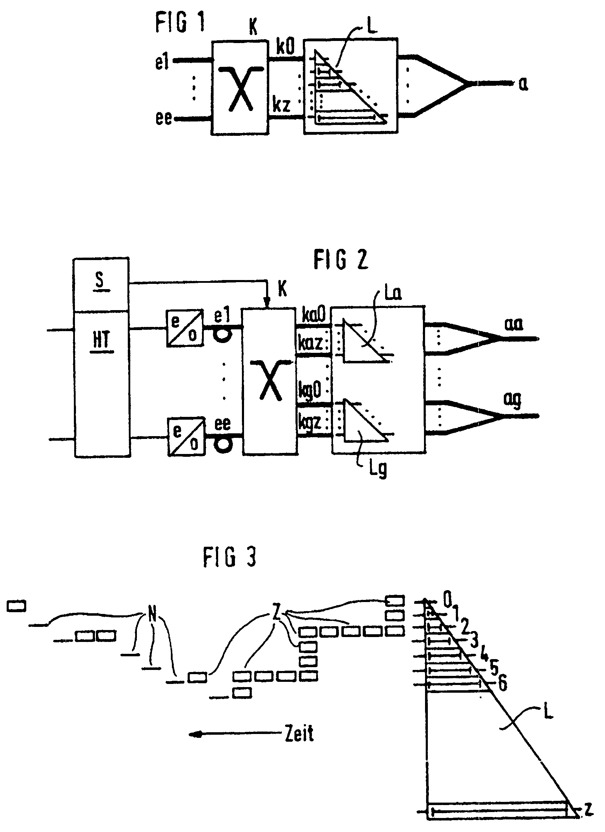

In Fig. 1 ist in zum Verständnis der Erfindung erforderlichem Umfange ein Ausführungsbeispiel einer eine Konzentratorfunktion realisierenden einstufigen optischen Koppeleinrichtung zur Durchschaltung von optischen Nachrichtenzellen dargestellt. Diese optische Koppeleinrichtung weist ein optisches Raumkoppelvielfach K auf, dessen Eingänge die Eingänge el,...,ee der Koppeleinrichtung darstellen; mit den Ausgängen k0,...,kz des Raumkoppelvielfachs K sind die Eingänge einer mit einer Mehrzahl von Lichtwellenleitern abgestufter Laufzeiten, die gleich ganzzahligen n-fachen (mit n ≥ 0) der Nachrichtenzellendauer sind, gebildeten optischen Laufzeitharfe L verbunden, deren Ausgänge zu der Ausgangsleitung a der optischen Koppeleinrichtung zusammengefaßt sind.

Wie aus Fig. 2 ersichtlich ist, können die Ausgänge des Raumkoppelvielfachs K auch in Gruppen von Ausgängen ka0,.. ..,kaz; kg0,...,kgz unterteilt sein, deren einzelne Ausgänge (z.B. ka0,...,kaz) mit den einzelnen Eingängen jeweils ein und derselben optischen Laufzeitharfe (z.B. La) einer Gruppe von Laufzeitherfen La,...,Lg verbunden sind; die Ausgänge jeder solchen Laufzeitharfe sind jeweils zu einem anderen Konzentratorausgang aa,ag zusammengeführt.

Wie weiter aus Fig.2 ersichtlich ist, können die Eingänge el, .,ee des optischen Raumkoppelvielfachs K (ggf. über Verzögerungsleitungen) an elektrooptische Wandler e/o angeschlossen sein, die ihrerseits einem mit einer Koppelvielfachsteuerung S verbundenen elektrischen Header-Translator HT nachfolgen. In einem solchen Header-Translator werden in der ATM-Technik üblicher Weise die Header ersetzt und die danach elektrooptisch umzuwandelnden Nachrichtenzellen in entsprechenden Zellenabständen geformt; dabei werden auch die entsprechenden Steuersignale zur Steuerung des Raumkoppelvielfachs (K in Fig. 1 und Fig. 2) abgeleitet. Die optischen Raumkoppelvielfache (K in Fig. 1 und Fig. 2) können beispielsweise als Beneg-Banyan-Netzwerke mit elektrisch gesteuerten, optischen Schaltern in einer der Technologien der integrierten Optik implementiert sein; die optischen Laufzeitharfen (L in Fig. 1; La,...,Lg in Fig.2) können jeweils durch eine Mehrzahl von ausgangsseitig parallelgeschalteten Lichtwellenleitern entsprechender Laufzeit oder auch durch einen mit einer Mehrzahl von Anzapfungen versehenen langen Lichtwellenleiter gebildet sein.

An den e Eingängen el,...,ee der in Fig. 1 skizzierten Konzentratoreinrichtung mögen statistisch verteilt optische Nachrichtenzellen eintreffen, wobei nacheinander an ein und demselben Eingang eintreffende Nachrichtenzellen jeweils einen definierten, für eine Umschaltung in der optischen Koppeleinrichtung und ggf. auch für einen Jitterausgleich ausreichenden zeitlichen Mindestabstand voneinander aufweisen mögen. Mit Hilfe der Laufzeitharfe L kann dann bewirkt werden, daß gleichzeitig eintreffende Nachrichtenzellen - im ungünstigsten Falle können e Nachrichtenzellen gleichzeitig eintreffen, nämlich eine Nachrichtenzelle an jedem der Eingänge el,...,ee - mit dem erforderlichen Mindestabstand sequentiell am Ausgang a der Laufzeitharfe L auftreten, wozu das Raumkoppelvielfach K, von einer elektrischen Steuereinrichtung (S in Fig. 3) gesteuert, nach Maßgabe des Eintreffens von Nachrichtenzellen an den Eingängen el, ... ee des Raumkoppelvielfachs K die betreffenden Nachrichtenzellen zu den jeweils in Frage kommenden Eingängen k0,...,kz der Laufzeitharfe L durchschaltet. Wie die Durchschaltung von an den Eingängen eines Raumkoppelvielfachs statistisch eintreffenden Nachrichtenzellen zu den einzelnen Lichtwellenleitern einer nachfolgenden Laufzeitharfe in besonders zweckmäßiger Weise geschehen kann, verdeutlicht Fig. 3.

In Fig.3 sind gleichzeitig bzw. nacheinander eingetroffene Nachrichtenzellen Z angedeutet, die dabei an beliebigen Eingängen (el,...,ee in Fig. 1) des optischen Raumkoppelvielfachs (K in Fig.1) eingetroffen sein können; Zeitpunkte, in denen an keinem Eingang (el,...,ee in Fig. 1) des optischen Raumkoppelvielfachs (K in Fig. 1) eine Nachrichtenzelle eintrifft, sind in Fig. 3 mit N bezeichnet. Die Nachrichtenzellen Z sind in Fig. 3 in Abhängigkeit von der Zeit so dargestellt, wie sie nach Maßgabe ihres Eintreffens an den Eingängen (el,...,ee in Fig.1) des Raumkoppelvielfachs (K in Fig. 1) an dessen Ausgängen (k0,..., kz in Fig. 1) auftreten; in der nachfolgenden Laufzeitharfe (L in Fig. 1) erfahren sie dann die in Fig. 3 rechts mit 0, 1, 2, 3, 4, 5, 6,...,z angedeuteten Zellenlaufzeiten. Dabei durchlaufen sukzessive eintreffende Nachrichtenzellen bis zu einem erstmaligen gleichzeitigen Eintreffen einer Mehrzahl von Nachrichtenzellen den Lichtwellenleiter mit einer Laufzeit 0 gleich dem 0-fachen der Nachrichtenzellendauer.

Bei erstmaligem gleichzeitigem Eintreffen von m (= 3 in Fig. 3) Nachrichtenzellen durchlaufen diese Nachrichtenzellen jeweils einen anderen von m (= 3) Lichtwellenleitern der Laufzeitharfe mit Laufzeiten (0, 1, 2 in Fig. 3) gleich dem 0-fachen bis (m-1)-fachen der Nachrichtenzellendauer.

In Beispiel gemäß Figur 3 sind danach drei Nachrichtenzellen jeweils einzeln eingetroffen; solche jeweils einzeln eintreffenden Nachrichtenzellen, durchlaufen sukzessive den Lichtwellenleiter mit der jeweils größten gerade zuvor in Anspruch genommenen Laufzeit, im Beispiel also den Lichtwellenleiter mit der Zellenlaufzeit 2.

Treffen, wie dies in Fig. 3 für die nächsten vier Nachrichtenzellen angedeutet ist, jeweils m Nachrichtenzellen gleichzeitig ein, so durchlaufen diese Nachrichtenzellen jeweils einen anderen von n Lichtwellenleitern der Laufzeitharfe mit Laufzeiten gleich der jeweils größten gerade zuvor in Anspruch genommenen Laufzeit und den m-1 in der Laufzeitstufung nächstgrößeren Laufzeitdauern; in dem in Fig. 3 skizzierten Beispiel sind dies die Lichtwellenleiter mit den Zellenlaufzeiten 2, 3, 4 und 5.

Im Beispiel gemäß Fig. 3 sind danach wieder zwei Nachrichtenzellen einzeln eingetroffen, die somit sukzessive den Lichtwellenleiter mit der jeweils größten gerade zuvor in Anspruch genommenen Laufzeit durchlaufen, d.h. den Lichtwellenleiter mit der Zellenlaufzeit 5.
Anschließend sind im Beispiel gemäß Fig. 3 wieder zwei Nachrichtenzellen gleichzeitig eingetroffen, von denen somit je eine den Lichtwellenleiter mit der jeweils größten gerade zuvor in Anspruch genommenen Laufzeit durchläuft und die andere den Lichtwellenleiter mit der nächstgrößeren Laufzeitdauer; im Beispiel gemäß Fig. 3 handelt es sich um die Zellenlaufzeiten 5 und 6.

Bei jedem Nichteintreffen jeglicher Nachrichtenzelle, d.h. wenn an keinem der Eingänge el,...,ee (in Fig. 1).eine Nachrichtenzelle eintrifft, wird an Stelle des Lichtwellenleiters mit der jeweils größten gerade zuvor in Anspruch genommenen Laufzeit der Lichtwellenleiter mit der um eine Nachrichtenzellendauer kürzeren Laufzeit zum nunmehr aktuellen Lichtwellenleiter mit der größten gerade in Anspruch genommenen Laufzeit bestimmt. Im Beispiel gemäß Fig. 3 durchläuft daher die nach einem einmaligen Nichteintreffen jeglicher Nachrichtenzelle einzeln eingetroffene Nachrichtenzelle den 5 Zellenlaufzeiten langen Lichtwellenleiter, und die nach anschließendem dreimaligem Nichteintreffen jeglicher Nachrichtenzelle jeweils einzeln eingetroffenen nächsten beiden Nachrichtenzellen durchlaufen den Lichtwellenleiter mit der um weitere drei Zellenlaufzeiten kleineren Zellenlaufzeit 2.

Kommt es, wie dies auch in Fig. 3 angedeutet ist, danach erneut zu einem zweimaligem Nichteintreffen jeglicher Nachrichtenzelle, so wird schließlich eine danach einzeln eintreffende Nachrichtenzelle wieder zu dem Lichtwellenleiter mit der Zellenlaufzeit 0 durchgeschaltet.

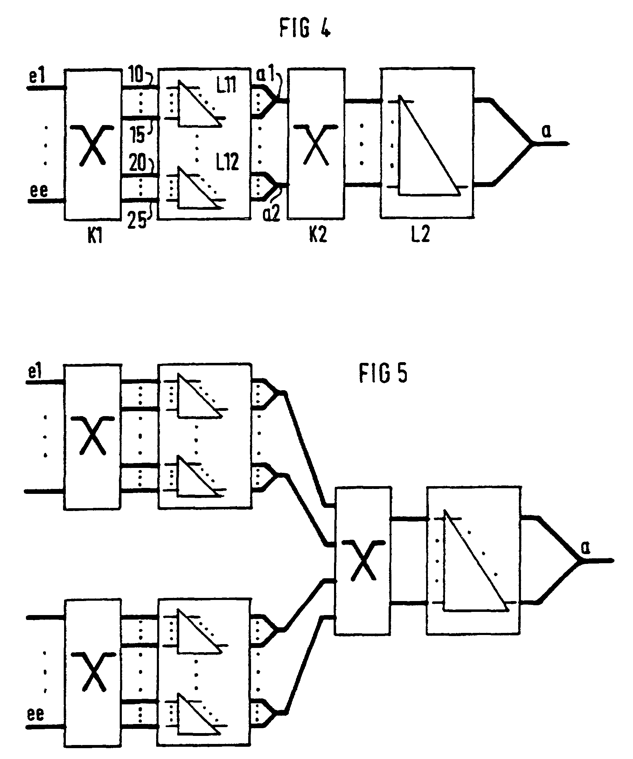

Die Anzahl der Ausgänge des Raumkoppelvielfachs K (in Fig.1) bzw. der Eingänge der Laufzeitharfe L (in Fig. 1) und die maximale Verzögerungszeit in der Laufzeitharfe werden nach der zulässigen Zellenverlustwahrscheinlichkeit bei der erforderlichen Höchstlast ausgelegt. Zieht man als Richtwert für die Mindestanzahl der Lichtwellenleiter der Laufzeitharfe bekannte Werte für einen sog. Knock-out-switch heran, so sind bei 80 % Last am Ausgang zwölf Leitungen ausreichend, um eine Zellenverlustwahrscheinlichkeit von weniger als 10⁻¹¹ zu erzielen; andererseits ist in der Laufzeitharfe eine maximale Verzögerungszeit erforderlich, die in der Größenordnung der Dauer von 60 Nachrichtenzellen liegt. Unter solchen Randbedingungen würde eine einstufige Laufzeitharfe (mit 60 Eingängen) nicht optimal sein. Zweckmäßig ist unter diesen Umständen eine zweistufige Koppeleinrichtung, wie sie etwa in Fig. 4 skizziert ist. Gemäß Fig. 4 führen die Eingangsleitungen el,...,ee der optischen Koppeleinrichtung zu einem Raumkoppelvielfach K1 einer ersten Raumkoppelstufe, dessen beispielsweise zwölf Ausgänge zwei Gruppen von Ausgängen 10, ... ,15; 20,...,25 bilden, deren einzelne Ausgänge mit den einzelnen Eingängen zweier Laufzeitharfen L11; L12 verbunden sind; die Ausgänge jeder solchen Laufzeitharfe sind jeweils zu einem gemeinsamen Ausgang zusammengefaßt, der gemäß Fig.2 zu einem Eingang eines optischen Raumkoppelvielfachs K2 einer zweiten Raumkoppelstufe führt. Dieses Raumkoppelvielfach K2 weist beispielsweise zehn Ausgänge auf, die zu entprechenden Eingängen einer nachfolgenden Laufzeitharfe L2 führen; die Ausgänge der Laufzeitharfe L2 schließlich sind zu dem Ausgang a der Koppeleinrichtung gemäß Fig. 4 zusammengefaßt. Dabei weisen die beiden Laufzeitharfen L11, L12 im Beispiel je sechs Lichtwellenleiter auf, deren Laufzeit gleich der Dauer von im Beispiel 0, 1, 2, 3, 4 bzw. 5 Nachrichtenzellen ist, und die Laufzeitharfe L2 weist im Beispiel zehn Lichtwellenleiter auf, deren Laufzeit gleich der Dauer von im Beispiel 0, 6, 12, 18, .... 42, 48 bzw. 54 Nachrichtenzellen ist. Es sei hier bemerkt, daß bei einer (wie im vorstehenden Zahlenbeispiel) niedrigen Anzahl von (im Zahlen-Beispiel 2) zwischen der ersten Stufe und der zweiten Stufe verlaufenden Leitungen die zweite Stufe auch rekursiv realisiert werden kann, indem in an sich bekannter Weise entsprechende Ausgänge der ersten Stufe zu entsprechenden Eingängen der ersten Stufe zurückgeführt werden und dafür Sorge getragen wird, daß die Laufzeitharfen der ersten Stufe auch Lichtwellenleiter mit den in der Laufzeitharfe der zweiten Stufe erforderlichen Laufzeiten aufweisen.

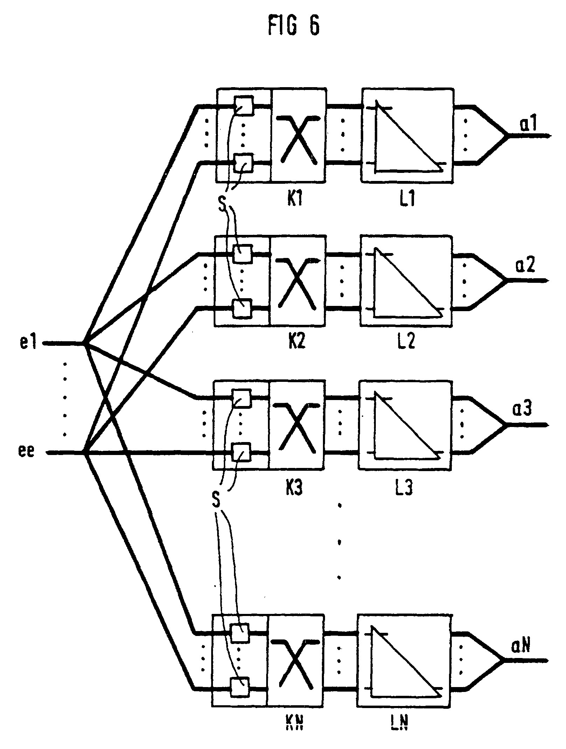

Ein weiteres Beispiel für einen mehrstufigen Konzentrator mit mehreren bzw. einer Laufzeitharfe(n) je Raumkoppelvielfach ist in Fig. 5 skizziert, ohne daß dieses Beispiel noch weiterer Erläuterungen bedarf.

Um zu einer optischen Koppeleinrichtung mit einer Vielzahl von Eingängen und einer Vielzahl von Ausgängen zu gelangen, ist es möglich, eine Vielzahl von Konzentratoren, wie sie z.B. Fig. 1, Fig. 2, Fig. 4 und Fig. 5 zeigen, eingangsseitig parallelzuschalten und dabei in jede von einem Vielfachschaltungspunkt zu einem Konzentratoreingang führende Verbindung ein Selektivelement, z.B. ein Filter oder einen Schalter, einzufügen. Man erhält dann beispielsweise eine Anordnung, wie sie in Fig. 6 skizziert ist.

In der optischen Koppeleinrichtung gemäß Fig. 6 sind N Konzentratoreinrichtungen K1, L1; K2, L2; K3, L3;..., KN,LN vorgesehen, die jeweils zu einem von N Koppeleinrichtungs-Ausgängen a1, a2, a3,..., aN führen. Jeder Konzentrator weist e Eingänge auf, die jeweils mit einem von e Koppeleinrichtungs-Eingängen el, ...,ee optisch verbunden sind; dabei ist in jede solche Verbindung ein Selektionselement S eingefügt. Diese Selektionselemente werden durch ausgangsindividuelle Charakteristika der Nachrichtenpakete gesteuert, so daß jedes an einem der Eingänge el,...,ee eintreffende Nachrichtenpaket gerade zu demjenigen der Konzentrator und damit Koppeleinrichtungs-Ausgänge al,..., aN gelangt, für den es bestimmt ist. Dabei ist bei entsprechender Ausführung und Steuerung der Selektionselemente S auch ein Multicasting möglich. Als Selektionselement kann ein optisches Filter für eine ausgangsindividuelle optische Wellenlänge vorgesehen sein, wobei davon ausgegangen wird, daß für einen bestimmten Ausgang al, ... aN der Koppeleinrichtung destinierte optische Nachrichtenpakete mit einer ausgangsindividuellen optischen Wellenlänge in die optische Koppeleinrichtung eingegeben werden.

Als Selektionselement S kann auch jeweils ein elektrisch steuerbarer optischer Schalter vorgesehen sein, der jeweils durch ein der jeweiligen Nachrichtenzelle zugehöriges Steuersignal gesteuert wird.

Abschließend sei noch bemerkt, daß die oben beschriebenen Konzentratoreinrichtungen auch in optischen Koppelfeldern mit anderen, aus der elektrischen Vermittlungstechnik bekannten Strukturen Anwendung finden können, ohne daß dies hier noch näher erläutert werden muß, da dies zum Verständnis der Erfindung nicht mehr erforderlich ist.

## Patentansprüche

1. Verfahren zum Durchschalten von optischen Nachrichtenzellen über eine optische Koppeleinrichtung mit wenigstens einem Ein- (e1,...ee) und Ausgänge (k0,...kz) aufweisenden, optischen Raumkoppelvielfach (K), wobei zumindest ein Teil der Ausgänge (k0,..kz) des Raumkoppelvielfachs (K) jeweils mit Eingängen einer optischen Laufzeitharfe (L) verbunden ist, bei dem die Ausgangssignale der optischen Laufzeitharfe (L) zu einem Signal (a) zusammengefaßt werden und die n Lichtwellenleiter der optischen Laufzeitharfe (L) jeweils eine unterschiedliche Laufzeit aufweisen, wobei die Laufzeit ein ganzzahliges Vielfaches der Nachrichtenzellendauer ist,
**dadurch gekennzeichnet,**
- **daß** nach Maßgabe des Eintreffens von Nachrichtenzellen an den Eingängen (e1,...ee) des Raumkoppelvielfachs (K) die optischen Nachrichtenzellen im Raumkoppelvielfach (K) zur nachfolgenden optischen Laufzeitharfe (L) in der Weise durchgeschaltet werden,
**daß** sukzessive eintreffende Nachrichtenzellen einen aktuell bestimmten Lichtwellenleiter der optischen Laufzeitharfe (L) durchlaufen,
- **daß** bei gleichzeitigem Eintreffen von m Nachrichtenzellen, ausgehend von dem Lichtwellenleiter mit der größten zuvor in Anspruch genommenen Laufzeit, diese Nachrichtenzellen jeweils einen anderen von den n Lichtwellenleitern der Laufzeitharfe mit Laufzeiten der jeweils größten gerade zuvor in Anspruch genommenen Laufzeit und den m-1 in der Laufzeitstufung nächstgrößeren Laufzeitdauern durchlaufen und
- **daß** bei jedem Nichteintreffen von Nachrichtenzellen an Stelle des Lichtwellenleiters mit der jeweils größten gerade zuvor in Anspruch genommenen Laufzeit der Lichtwellenleiter mit der um eine Nachrichtenzellendauer kürzeren Laufzeit zum nunmehr aktuellen Lichtwellenleiter mit der größten gerade in Anspruch genommenen Laufzeit bestimmt wird.

2. Verfahren nach Anspruch 1
**dadurch gekennzeichnet,**
**daß** sukzessive eintreffende Nachrichtenzellen bis zu einem erstmaligen gleichzeitigen Eintreffen einer Mehrzahl von Nachrichtenzellen den Lichtwellenleiter mit einer Laufzeit gleich dem 0-fachen der Nachrichtenzellendauer durchlaufen.

3. Verfahren nach einem der Ansprüche 1 oder 2
**dadurch gekennzeichnet,**
**daß** ein Teil der Ausgänge (10,...15) des Raumkoppelvielfachs (K) eine Gruppe bildet und dieser eine optische Laufzeitharfe (L) zugeordnet ist,
**daß** bei mehreren Gruppen von Ausgangssignalen (10,...15; 20,...25) mehrere optische Laufzeitharfen (L) vorgesehen sind.

4. Verfahren nach einem der Ansprüche 1 bis 3
**dadurch gekennzeichnet,**
**daß** zumindest ein Ausgangssignal (a1) zumindest einer optischen Laufzeitharfe (L11) als zumindest ein Eingangssignal des Raumkoppelvielfachs (K2) erneut zugeführt wird, wobei bei dieser rekursiven Realisierung die optische Laufzeitharfe auch Lichtwellenleiter mit den für einen zweiten Durchlauf erforderlichen Laufzeiten aufweist.

5. Verfahren nach einem der Ansprüche 1 bis 4
**dadurch gekennzeichnet,**
**daß** bei mehreren optischen Laufzeitharfen (L11,L12) deren Ausgangssignale über ein weiteres Raumkoppelvielfach (K2) an zumindest eine weitere optische Laufzeitharfe (L2) geführt werden, wobei die Ausgangssignale der weiteren optischen Laufzeitharfe (L2) zu einem Signal (a) zusammengefaßt werden.

## Claims

1. Method for through-switching of optical message cells via an optical coupling device having at least one space division switching matrix (K) which has inputs (e1,...ee) and outputs (k0,....kz), with at least some of the outputs (k0,...kz) of the space division switching matrix (K) being connected to respective inputs of an optical variable delay unit (L), in which the output signals from the optical variable delay unit (L) are combined to form a signal (a), and the n optical waveguides of the optical variable delay unit (L) each have a different delay time, with the delay time being an integer multiple of the message cell duration,
**characterized**
- **in that** the optical message cells are through-connected in the space division switching matrix (K) to the subsequent optical variable delay unit (L) on the basis of the arrival of message cells at the inputs (e1,...ee) of the space division switching matrix (K) in such a manner that successive arriving message cells pass through an instantaneously determined optical waveguide in the optical variable delay unit (L),
- **in that**, when m message cells arrive at the same time, and starting from the waveguide with the greatest delay time already used, these message cells in each case pass through another of the n optical waveguides in the variable delay unit with delay times corresponding to the respectively greatest currently previously used delay time, and pass through the m-1 next greater delay time durations in the delay time step, and
- **in that**, whenever message cells do not arrive, instead of the optical waveguide with the respectively greatest currently previously used delay time, the optical waveguide with the delay time that is shorter by one message cell duration is determined for the optical waveguide which is now the current waveguide and has the greatest currently used delay time.

2. Method according to Claim 1,
**characterized**
**in that** the successive arriving message cells pass through the optical waveguide with a delay time that is equal to zero times the message cell duration until a first simultaneous arrival of two or more message cells.

3. Method according to one of Claims 1 or 2,
**characterized**
**in that** some of the outputs (10,...15) of the space division switching matrix (K) form a group, and this group has an associated optical variable delay unit (L),
**in that** two or more optical variable delay units (L) are provided where there are two or more groups of output signals (10,...15; 20,...25).

4. Method according to one of Claims 1 to 3,
**characterized**
**in that** at least one output signal (a1) is supplied once again to at least one optical variable delay unit (L11) as at least one input signal to the space division switching matrix (K2), with the optical variable delay unit in this recursive implementation also having optical waveguides with the delay times that are required for the second pass.

5. Method according to one of Claims 1 to 4,
**characterized**
**in that**, when there are two or more optical variable delay units (L11, L12), their output signals are passed via a further space division switching matrix (K2) to at least one further optical variable delay unit (L2), with the output signals from the further optical variable delay unit (L2) being combined to form a signal (a).

## Revendications

1. Procédé de commutation pour des cellules de communication optiques par l'intermédiaire d'un dispositif de couplage optique avec au moins une matrice optique de couplage spatial (K) présentant des entrées (e1, ..., ee) et des sorties (k0, ..., kz), au moins une partie des sorties (k0, ..., kz) de la matrice de couplage spatial (K) étant chacune reliée à des entrées d'une harpe optique de temps de propagation (L), dans lequel les signaux de sortie de la harpe optique de temps de propagation (L) sont regroupés en un signal (a) et les n fibres optiques de la harpe optique de temps de propagation (L) ont chacune une durée de propagation différente, le temps de propagation étant un multiple entier de la durée d'une cellule de communication, **caractérisé en ce que**
- les cellules de communication optiques sont commutées dans la matrice de couplage spatial (K) vers la harpe optique suivante de temps de propagation (L) selon l'arrivée de cellules de communication aux entrées (e1, ..., ee) de la matrice de couplage spatial (K) de manière telle que des cellules de communication arrivant successivement traversent une fibre optique de la harpe optique de temps de propagation actuellement déterminée, **en ce que**,
- lors de l'arrivée simultanée de m cellules de communication, partant de la fibre optique avec le temps de propagation le plus élevé sollicité auparavant, lesdites cellules de communication traversent chacune une autre des n fibres optiques de la harpe de temps de propagation avec des temps de propagation égaux au temps de propagation le plus élevé sollicité juste avant dans chaque cas et avec les m-1 durées de temps de propagation directement supérieures dans l'échelonnement des temps de propagation et **en ce que**
- à chaque non-arrivée de cellules de communication, c'est, à la place de la fibre optique avec le temps de propagation le plus élevé sollicité juste avant dans chaque cas, la fibre optique avec le temps de propagation inférieur d'une durée d'une cellule de communication qui est désignée comme étant la fibre optique actuelle avec le temps de propagation le plus élevé qui vient d'être sollicité.

2. Procédé selon la revendication 1, **caractérisé en ce que** des cellules de communication arrivant successivement traversent la fibre optique avec un temps de propagation égal à zéro fois la durée d'une cellule de communication jusqu'à une première arrivée simultanée d'une pluralité de cellules de communication.

3. Procédé selon l'une des revendications 1 ou 2, **caractérisé en ce qu'**une partie des sorties (10, ..., 15) de la matrice de couplage spatial (K) constitue un groupe auquel est affectée une harpe optique de temps de propagation (L) et **en ce que** pour plusieurs groupes de signaux de sortie (10, ..., 15; 20, ..., 25) sont prévues plusieurs harpes optiques de temps de propagation (L).

4. Procédé selon l'une des revendications 1 à 3, **caractérisé en ce qu'**au moins un signal de sortie (a1) est de nouveau amené à au moins une harpe optique de temps de propagation (L11) en tant qu'au moins un signal d'entrée de la matrice de couplage spatial (K2), la harpe optique de temps de propagation présentant également, dans cette réalisation récurrente, des fibres optiques avec les temps de propagation requis pour un deuxième passage.

5. Procédé selon l'une des revendications 1 à 4, **caractérisé en ce que**, étant donné plusieurs harpes optiques de temps de propagation (L11, L12), leurs signaux de sortie sont amenés à au moins une autre harpe optique de temps de propagation (L2) par l'intermédiaire d'une autre matrice de couplage spatiale (K2), les signaux de sortie de l'autre harpe optique de temps de propagation (L2) étant regroupés en un signal (a).
